# EUROPEAN PATENT APPLICATION

(11) **EP 1 480 178 A2**
(43) Date of publication of application: **24.11.2004**
(21) Application number: 04252752.3
(22) Date of filing: 12.05.2004
(51) Int. Cl.: G08B 13/196, G08B 25/08, H04N 7/18

(54) **Security system**

(30) Priority: 20.05.2003 US 441328
(71) Applicant: Marconi Intellectual Property (Ringfence) Inc., Warrendale, PA 15086 (US)
(72) Inventor: Crawford, Christopher L., Winter Garden FL 34787 (US); Guzman, Cesar M., Palm Bay FL 32908 (US); McNeeley, Patrick T. Jr., Grayson GA 30017 (US); Robles, Hector L. Jr., Miami FL 33178 (US); Petrie, Ivor, Suwanee GA 30024 (US)
(74) Representative: O'Connell, David Christopher

(57) **Abstract**

A security system. The security system comprises N surveillance nodes, where N is greater than or equal to 17 and is an integer. Each surveillance node providing a video source of a scene of a location of the surveillance node. The security system comprises a monitoring node having a display in communication with the N surveillance nodes. The security system comprises a controller which simultaneously continuously shows on the display a live scene of the surveillance node when a predetermined event occurs at the surveillance node, and a recorded scene of the node for a predetermined time which spans before, during and after the predetermined event, the controller in communication with the monitoring node and the N surveillance nodes. Alternatively, N is greater than or equal to 2 and is an integer, and the security system comprises an ATM network through which the N surveillance nodes, the monitoring node and the controller communicate. A method for maintaining security.

## Description

### FIELD OF THE INVENTION

The present invention is related to a security system where a plurality of locations can be monitored from a single location and information about a location is displayed when a predetermined event occurs. More specifically, the present invention is related to a security system where a plurality of locations can be monitored from a single location and information about a location is displayed when a predetermined event occurs at the location and the information is transmitted from each of the locations to the single location through an ATM network.

### BACKGROUND OF THE INVENTION

Traditional analog CCTV technology does not scale well compared to the digital solutions available today. The shear numbers of surveillance cameras, potentially beyond 2,000 cameras, could not be managed effectively with the existing CCTV infrastructure. The capacity and scalability required a new technology.

In addition to increasing the number of surveillance locations/cameras, technology must be employed to assist the security personnel in monitoring all of the various locations. Integrating the security Access Control System (ACS) with the video surveillance system provides the ability for events to be recorded as they occur. Security personnel have at their fingertips digital access to the recorded event, as well as, bi-directional audio and pan-tilt-zoom (PTZ) video control of the surveillance cameras assigned to the incident location. By integrating the subsystems of surveillance and video recording, with the Access Control System, overall response time is reduced, while the effectiveness of the security officer is increased given the new tools available to them.

While implementing a new technology to help drive security objectives, it is imperative that costs be considered as well. For example, too much cost to secure an airport would translate into unaffordable travel. A digitally-based surveillance architecture, allows for the convergence of multiple overlay networks, i.e. voice, video, and data, to be placed onto a single network backbone. This not only improves the integration capabilities throughout the facility, such as an airport, it provides a superior scalable architecture that does not sacrifice safety or security for the sake of saving money, but in fact, increases the effectiveness of the overall system.

### SUMMARY OF THE INVENTION

The present invention pertains to a security system. The security system comprises N surveillance nodes, where N is greater than or equal to 17 and is an integer. Each surveillance node providing a video source of a scene of a location of the surveillance node. The security system comprises a monitoring node having a display in communication with the N surveillance nodes. The security system comprises a controller which simultaneously continuously shows on the display a live scene of the surveillance node when a predetermined event occurs at the surveillance node, and a recorded scene of the node for a predetermined time which spans before, during and after the predetermined event, the controller in communication with the monitoring node and the N surveillance nodes.

The security system comprises N surveillance nodes, where N is greater than or equal to 2 and is an integer. Each surveillance node providing a video source of a scene of a location of the surveillance node, The security system comprises a monitoring node having a display in communication with the N surveillance nodes. The security system comprises a controller which simultaneously continuously shows on the display a live scene of the surveillance node when a predetermined event occurs at the surveillance node, and a recorded scene of the node for a predetermined time which spans before, during and after the predetermined event, the controller in communication with the monitoring node and the N surveillance nodes. The security system comprises an ATM network through which the N surveillance nodes, the monitoring node and the controller communicate.

The present invention pertains to a method for maintaining security. The method comprises the steps of providing a video source of a scene of a location of each surveillance node of N surveillance nodes, where N is greater than or equal to 17 and is an integer. There is the step of showing simultaneously and continuously on a display of a monitoring node in communication with the N surveillance nodes with a controller a live scene of the surveillance node when a predetermined event occurs at the surveillance node, and a recorded scene of 'the node for a predetermined time which spans before, during and after the predetermined event. The controller in communication with the monitoring node and the N surveillance nodes.

The present invention pertains to a method for maintaining security. The method comprises the steps of providing a video source of a scene of a location of each surveillance node of N surveillance nodes, where N is greater than or equal to 2 and is an integer. There is the step of showing simultaneously and continuously on a display of a monitoring node in communication with the N surveillance nodes with a controller a live scene of a surveillance node when a predetermined event occurs at the surveillance node, and a recorded scene of the surveillance node for a predetermined time which spans before, during and after the predetermined event, the controller in communication with the monitoring node and the N surveillance nodes. There is the step of communicating between the N surveillance nodes, the monitoring node and the controller through an ATM network.

### BRIEF DESCRIPTION OF THE DRAWINGS

In the accompanying drawings, the preferred embodiment of the invention and preferred methods of practicing the invention are illustrated in which:
Figure 1 is a SOW system overview of the security system.
Figure 2 is a schematic representation of a DVADTS ATM Network overview.
Figure 3 shows a SOW screen capture.

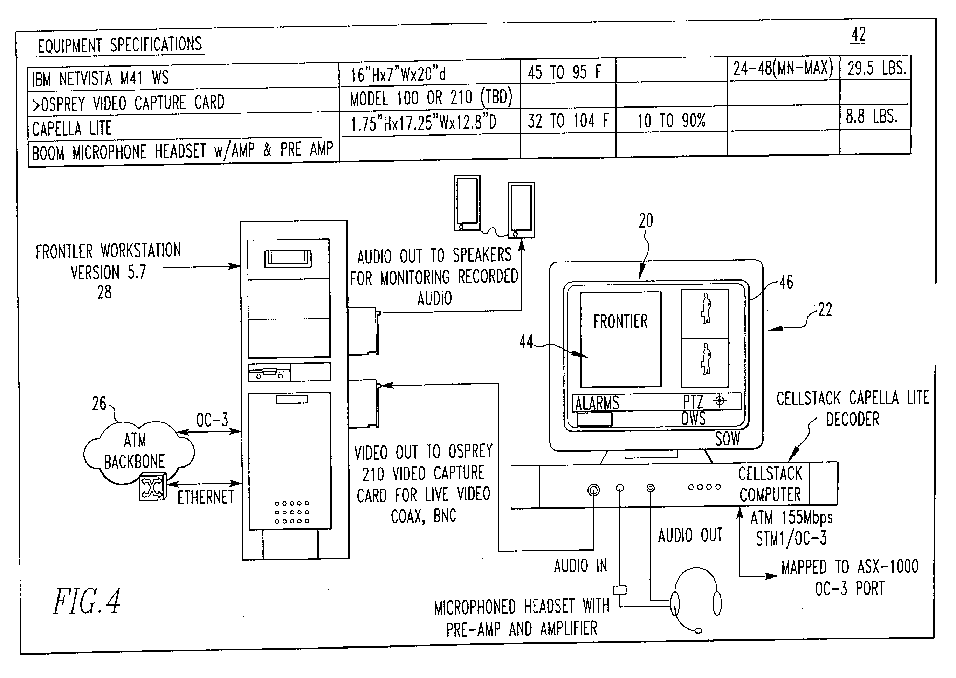

Figure 4 is a schematic representation of a SOW overview.

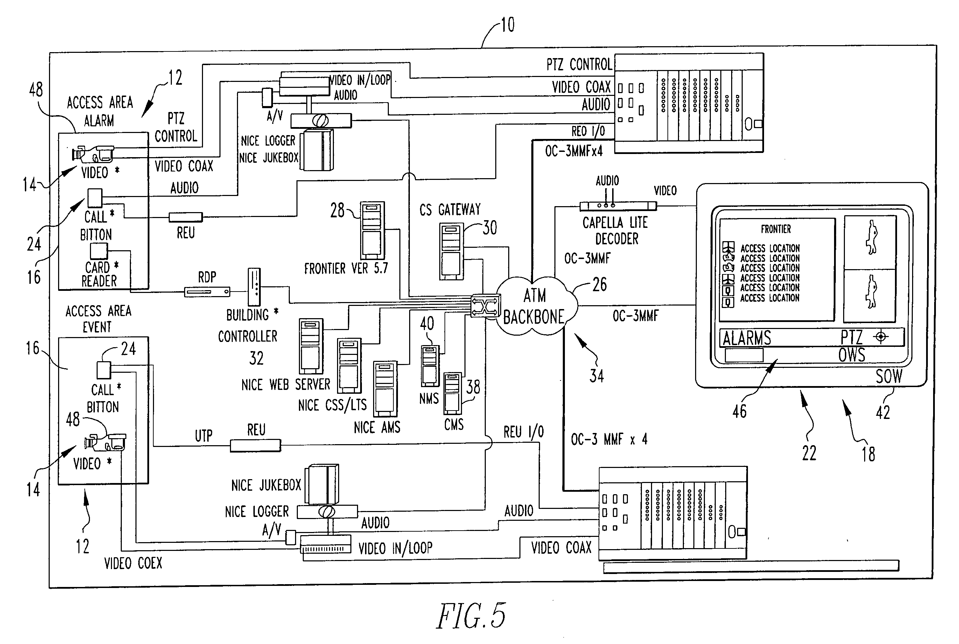

Figure 5 is a schematic representation of the integrated system overview.

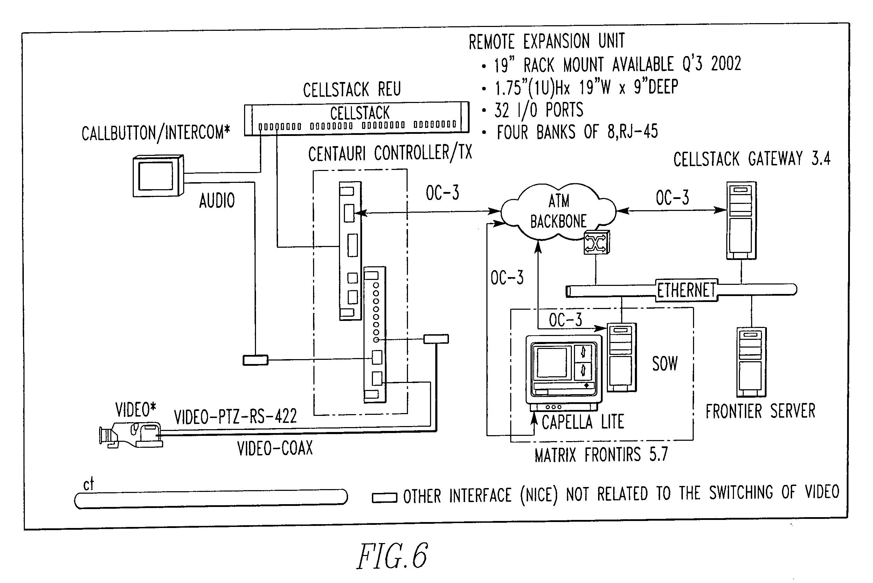

Figure 6 is a schematic representation of a call-button event overview.

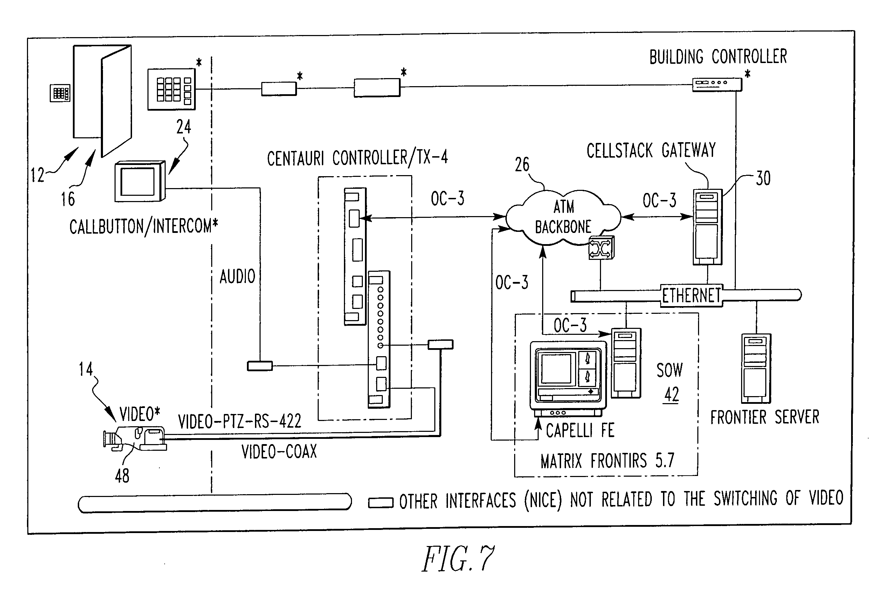

Figure 7 is a schematic representation of an alarm event overview.
Figure 8 is a schematic representation of the ACS architecture.
Figure 9 is a schematic representation of the DVTS architecture.
Figure 10 is a schematic representation of the DVRS architecture.
Figure 11 is a schematic representation of the DVADTS architecture.
Figure 12 is a schematic representation of the audio interface unit architecture.
Figure 13 is a schematic representation of the integrated security system overview.

### DETAILED DESCRIPTION

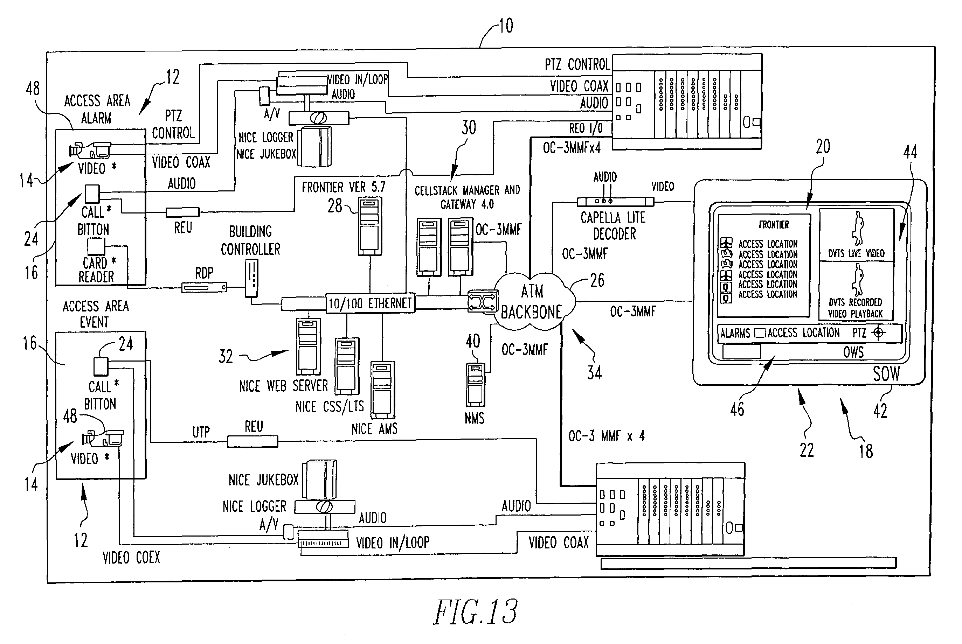

Referring now to the drawings wherein like reference numerals refer to similar or identical parts throughout the several views, and more specifically to figure 13 thereof, there is shown security system 10. The security system 10 comprises N surveillance nodes 12, where N is greater than or equal to 17 and is an integer. Each surveillance node 12 providing a video source 14 of a scene of a location 16 of the surveillance node 12. The security system 10 comprises a monitoring node 18 having a display 20 in communication with the N surveillance nodes 12. The security system 10 comprises a controller 22 which simultaneously continuously shows on the display 20 a live scene of the surveillance node 12 when a predetermined event occurs at the surveillance node 12, and a recorded scene of the node for a predetermined time which spans before, during and after the predetermined event, the controller 22 in communication with the monitoring node 18 and the N surveillance nodes 12.

Preferably, each surveillance node 12 includes an audio source 24 which receives sounds from the respective surveillance node's 12 location 16, and the controller 22 plays the associated sound from the surveillance node 12 with either the live or the recorded scenes. The system preferably including an ATM network 26 through which the N surveillance nodes 12, the monitoring node 18 and the controller 22 communicate. Preferably, the system includes an access control system 28 which manages access through the locations 16 of the surveillance nodes 12. T the access control system 28 in communication with the surveillance nodes 12.

The ATM network 26 preferably includes a DVTS 30 which produces live audio/video, feeds of the locations 16 of the surveillance nodes 12. Preferably, the system includes a DVRS 32 which continuously records real-time video from each video source 14. The ATM network 26 is preferably part of a DVADTS 34 in communication with the ACS 28, DVTS 30 and the DVRS 32, which supports the real-time audio and video for the DVTS 30, data for the ACS 28 and non-real time video for the DVRS 32.

Preferably, the ATM network 26 includes a cable system and circuits 36, and including a CMS 38 to manage and record the cable system and circuits 36 of the ATM network 26. The system preferably includes an NMS 40 in communication with the ATM network 26 which monitors the ATM network 26 for faults and performance. Preferably, the monitoring node 18 includes a SOW 42 through which communications with and commands to the surveillance nodes 12 occur. The SOW 42 preferably has a GUI 44 with the display 20, and an operations screen 46 which shows a map with respect to a surveillance node 12 of interest, a live video window and a recorded video playback window of the location 16 of the surveillance node 12 of interest.

Preferably, the video source 14 includes a camera 48, and the SOW 42 aims the camera 48 to obtain a desired view of the location 16. The SOW 42 preferably controls the DVRS 32, the ACS 28 and the DVTS 30. Preferably, the system includes SERs 50. Each SER 50 having an encoder 52 which receives video from the cameras 48 of the surveillance nodes 12 that are in communication with a respective SER 50, and compresses the video, and transmits the compressed video into the ATM network 26. Each SER 50 preferably receiving from and transmitting to the SOW 42 and the surveillance node 12 to which it is connected bidirectional audio.

The security system 10 comprises N surveillance nodes 12, where N is greater than or equal to 2 and is. an integer. Each surveillance node 12 providing a video source 14 of a scene of a location 16 of the surveillance node 12. The security system 10 comprises a monitoring node 18 having a display 20 in communication with the N surveillance nodes 12. The security system 10 comprises a controller 22 which simultaneously continuously shows on the display 20 a live scene of the surveillance node 12 when a predetermined event occurs at the surveillance node 12, and a recorded scene of the node for a predetermined time which spans before, during and after the predetermined event, the controller 22 in communication with the monitoring node 18 and the N surveillance nodes 12. The security system 10 comprises an ATM network 26 through which the N surveillance nodes 12, the monitoring node 18 and the controller 22 communicate.

The present invention pertains to a method for maintaining security. The method comprises the steps of providing a video source 14 of a scene of a location 16 of each surveillance node 12 of N surveillance nodes 12, where N is greater than or equal to 17 and is an integer. There is the step of showing simultaneously and continuously on a display 20 of a monitoring node 18 in communication with the N surveillance nodes 12 with a controller 22 a live scene of the surveillance node 12 when a predetermined event occurs at the surveillance node 12, and a recorded scene of the node for a predetermined time which spans before, during and after the predetermined event, The controller 22 in communication with the monitoring node 18 and the N surveillance nodes 12.

Preferably, each surveillance node 12 includes an audio source 24 which receives sounds from the respective surveillance node's 12 location 16, and there is the step of showing the step of playing the associated sound from the surveillance node's 12 location 16 with either the live or the recorded scenes with the controller 22. There is preferably the step of communicating through an ATM network 26 between the N surveillance nodes 12, the monitoring node 18 and the controller 22.

Preferably, the step of managing access through the locations 16 of the surveillance nodes 12 with an access control system 28. The access control system 28 in communication with the surveillance nodes 12. The providing step preferably includes the step of producing live audio/video feeds of the locations 16 of the surveillance nodes 12 with the DVTS 30 of the ATM network 26. There is preferably the step of recording continuously real-time video from each video source 14 with a DVRS 32. Preferably, the providing step includes the step of supporting with the ATM network 26 that is part of DVADTS 34 in communication with the ACS 28, DVTS 30 and the DVRS 32, the real-time audio and video for the DVTS 30, data for the ACS 28 and non-real-time video for the DVRS 32.

Preferably, the providing step includes the step of recording/managing a cable system and circuits 36 of the ATM network 26 with a CMS 38. There is preferably the step of monitoring the ATM network 26 for faults and performance with an NMS 40 in communication with the ATM network 26. Preferably, the providing step includes the steps of communicating with a SOW 42 of the monitoring node 18 from the surveillance nodes 12, and sending commands from the SOW 42 to the surveillance nodes 12.

The showing step preferably includes the step of showing on an operations screen 46 of the display 20 a map with respect to a surveillance node 12 of interest, a live video window and a recorded video playback window of the location 16 of the surveillance node 12 of interest. Preferably, there is the step of aiming with the SOW 42 the camera 48 of the video source 14 to obtain a desired view of the location 16. There is preferably the step of controlling the DVRS 32, the ACS 28 and the DVTS 30 with the SOW 42. In a preferred embodiment, the actual controls are a part of the sequencing setup done in the database housed on the ACS server.

Preferably, there are the steps of receiving video from the cameras 48 of the surveillance nodes 12 at an encoder 52 of a respective SER 50 that is in communication with the surveillance nodes 12, compressing the video with the encoder 52, and transmitting the compressed video into the ATM network 26 with the encoder 52. There is preferably the step of receiving from and transmitting to the SOW 42 and the surveillance node 12 from each SER 50 to which each SER 50 is connected, bidirectional audio.

The present invention pertains to a method for maintaining security. The method comprises the steps of providing a video source 14 of a scene of a location 16 of each surveillance node 12 of N surveillance nodes 12, where N is greater than or equal to 2 and is an integer. There is the step of showing simultaneously and continuously on a display 20 of a monitoring node 18 in communication with the N surveillance nodes 12 with a controller 22 a live scene of a surveillance node 12 when a predetermined event occurs at the surveillance node 12, and a recorded scene of the surveillance node 12 for a predetermined time which spans before, during and after the predetermined event, the controller 22 in communication with the monitoring node 18 and the N surveillance nodes 12. There is the step of communicating between the N surveillance nodes 12, the monitoring node 18 and the controller 22 through an ATM network 26.

In the operation of the invention, the architecture of the security system 10 consists of several key elements including: access control, live video/audio surveillance, including surveillance telemetry support, audio/video recording, overall transport of audio, video and data, as well as, the overall system management. The goal was to integrate various elements/subsystems into one coherent and easily usable interface for the security officer.

Functionally, if a violation of a security door is attempted, an automated alarm initiates several activities. A security officer monitoring the airport is notified by the workstation at his console position, An Access Control System (ACS). 28 computer application automatically provides information about the violation such as invalid badge, badge used in the wrong area or forced door. The nearest Security system 10 camera 48 automatically records activities at the violation location 16. It should be noted that the camera at a given location is recording continuously 24x7, and as a result of the event at the time of the event and for a period of time before and after, for instance, 4 to 5 minutes before and for 15 minutes after the event, the recorded video is "tagged" for future retrieval.

Furthermore, two-way voice communications to the door intercom is also initiated on the same workstation. The Security system 10 application on the workstation automatically displays the video for the nearest camera 48. The camera 48 video and intercom audio are automatically continuously recorded and the alarm from the ACS 28 will request for the recording system to queue a recorded video/audio clip showing before/after the alarm event that is available on the officer's workstation. The officer now knows what has happened and can communicate with the individual at the door. The officer can then more effectively and efficiently respond to the alarm.

Additionally, the Security system 10 will provide the ability for the security officer from various SOW 42 locations 16 to pull up, on-demand, live video feeds from any of the hundreds of camera 48 locations 16. With full pan-tilt-zoom control capabilities built into the system, along with bi-directional audio, the security officer is provided surveillance capabilities outside of an alarm event. This gives the officer the freedom to monitor under his/her direction. The officer can also go back and pull up a stored event in digital archive, through database searches, such as, show me any motion activity occurring between x and y date at a particular location 16. This allows for highly sophisticated investigative techniques to be applied to areas that may or may not have generated a particular event in the Access Control Subsystem.

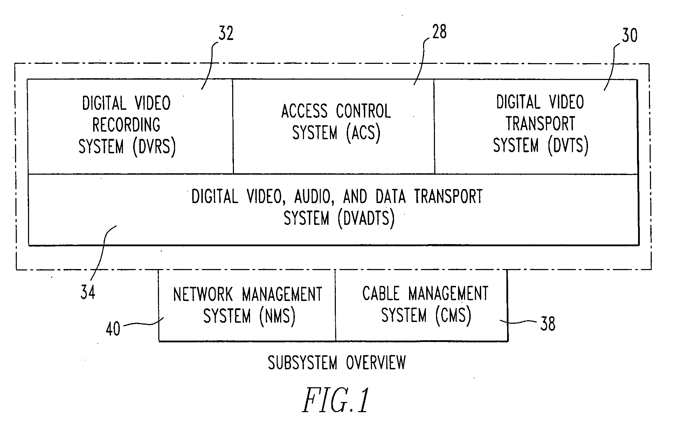

The overall Security system 10 integrated solution is comprised of several subsystem components, as shown in figure 1, which include:
· Access Control System (ACS) 28
· Digital Video Transport System (DVTS) 30
· Digital Video Recording and Storage System (DVRS) 32
· Digital Video, Audio, and Data Transport System (DVADTS) 34
· Network Management System (NMS) 40
· Cable Management System (CMS) 38

### Access Control System (ACS) 28

Matrix Systems, Inc. Provides the ACS 28. The Matrix Frontier software currently manages access to secured locations 16 through its series of ID badge workstations, databases, servers, building controllers 22, access keypads and card readers.

Through the DVRS 32 and DVTS 30 Application Programming Interfaces (APIs), the Matrix Frontier software communicates directly with the subsystems and request resources such as live audio/video feeds, camera 48 pan-tilt-zoom control, and digital recorded playback. These defined resources, such as Cameral in Concourse A, can be configured to be associated with a sequence, which is nothing more than a series of tasks to be followed when called upon. This sequence is then associated with events such as an Alarm that was triggered in Concourse A, at door 2. The sequence would be configured to send a live video feed to the Security Operator Workstations (SOWs) 42, so that the officer could then respond. This approach allows for on-demand video, utilizing bandwidth only when requested. It takes advantage of the underlying DVADTS 34, or backbone ATM network 26, to provide Quality-of-Service (QoS) Switched Virtual Circuits (SVCs). This allows a single security officer workstation to monitor thousands of cameras, if so desired, given ACS events trigger the importance of monitoring a surveillance node.

The ACS 28 supplied by Matrix Systems, Inc. consists of a network of controlled door access sub-systems that may include access keypads or card readers. These sub-systems are linked back through building controllers 22 to a server, co-located with and physically connected on a VPN to a node of the DVADTS 34. Also connected to the same VPN will be a number of Security Operator Workstations (SOWs) 42 located at various locations 16 around the airport.

The ACS communicates with the DVRS 32 and DVTS 30 subsystems through application programming interfaces (APIs). The DVRS 32 and DVTS 30 subsystems also have network connectivity to the aforementioned VPN which is transported over the DVADTS 34. This communications is secured in the DVADTS 34, and is primarily the networking protocol IP.

### Digital Video Transport System (DVTS) 30

The Digital Video Transport System (DVTS) 30 subsystem is made up of hardware and software products from CellStack Systems Limited product line. The role of the DVTS 30 is to provide live, high-quality (NTSC), full-frame rate (30fps), fully interlaced, video feeds with associated bi-directional audio to any requesting decoder location 16. The DVTS 30 further provides the means for camera telemetry support through the use of its data ports on its encode cards. The DVTS 30 subsystem is a digital audio/video encoding and decoding subsystem, which relies on the high-reliability and low-latency aspects of ATM for transporting digital video signals. Centauri video hubs are the only such system to incorporate integrated pan/tilt/zoom control and audio intercom capabilities within a single ATM based chassis.

The DVTS 30 design is centered on the CellStack Centauri video hub, which is a 12 Slot, 19" rack mounted chassis. The Centauri is a modular architecture based on a 19" high-performance chassis, and will support up to 24 NTSC (or S-Video) inputs, with full-motion, 30 frames per second, digital MJPEG compression. Transmission uplink is via four OC-3,155 Mbps ATM optical fibers with load sharing and dual-homing capability, enabling increased bandwidth and fault tolerance. Redundant chassis controllers, 22 redundant cooling fans, and "hot swap" capability for the modules provide additional fault tolerance. The system is highly modular, expandable, reliable and is fully compatible with the Marconi ATM DVADTS 34.

The Centauri will provide terminations for NTSC video from each camera 48 routed to the Security Equipment Room (SER) 50. There the NTSC video will be compressed using an M-JPEG encoder 52 then, passed onto the ATM for switching and transmission to any CellStack decoder (Capella Lite) in the Security system 10 (Capella Lite). Along with video, the Centauri will also provide an interface for bi-directional audio, PTZ camera 48 control data interfaces, an I/O I2C interface from the Remote Expansion Unit (REU) to the Centauri Controller, and up to four 155 Mbps ATM. connections to a network edge switch (ASX-1000).

The CellStack decoding product selected to functionally interface the Centauri video/audio/data with the Security Operator Workstation is the Cappella Lite. The Capella Lite is a standalone unit supporting low-delay, high-quality video and bi-directional audio. The Capella Lite connects to the ATM edge switching architecture via a 155Mbps OC-3 interface. A single composite video output and a two-way mono high performance audio channel will connect to the SOW 42 providing a 'real-time' networked security solution to the human interface. An operator microphone headset will be installed for two-way dialog with the remote intercom. Audio connectivity is established by acquiring an alarm or call button event (where applicable) in the Frontier application or initiated by the operator on his/her own via the CellStack Operator application. The audio will be simultaneously recorded via an audio interface that bridges the Centauri audio input/output to the DVRS 32 subsystem audio patch panel input.

To help facilitate external events entering the DVTS 30 subsystem, Cellstack has provided a unit that senses dry contact closures. The unit has many uses, and in the Security system 10 the main use is to sense when a Call Button at an intercom station has been pressed. The Remote Expansion Unit (REU) is a stand-alone, 19" rack mounted, CellStack device that provides up to 32, RJ-45 interface ports for user supplied third party devices. The devices that will interface with the REU in the Security system 10 will be Call Buttons located throughout the airport. The Remote Expansion Unit senses the call button and via an industry standard I2C bus passes the action onto the Centauri I/O interface where the appropriate data is placed onto the network via the ATM. The CellStack Gateway software receives this data, and under the command and control of a Client Software (Matrix Frontier Application) sets up the appropriate response actions.

With this system architecture, there is a significant reduction in fiber optic requirements for transporting the full-motion, full resolution video from hundreds of surveillance cameras 48 to multiple destinations throughout the Airport, when compared to traditional analog CCTV systems. The architecture can support both from point-to-point or point-to-multi-point video streams. A single digital video signal from a camera 48 location 16 can be sent to all SOW 42 monitoring locations 16, without multiplying the bandwidth requirements by the number of monitoring locations 16. This, and its ability to provide video on-demand, through Switched Virtual Circuits (SVCs), allows bandwidth to be managed, allowing the Security system 10 to virtually scale to an unlimited number of camera 48 locations 16. Additionally, the ability to apply QoS contracts on the SVCs for video and audio allow for a managed approach to guaranteeing the priority and performance of the security related traffic within the DVADTS 34 network.

### Technical Specifications (example)

Live Video
   · NTSC
   · MJPEG Compression
   · 30 FPS (60 fields)
   · Interlaced
   · 720 x 480 Resolution
   · Input/Output Impedance 75 Ohms
Centauri Audio Interfaces
   · Input:
      Level: 1 VRMS UnHal./2 VRMS Bal.
      Impedance: 40K Ohms UnBal./ 40K Ohms Bal.
   · Output:
      Level: .707 VRMS UnBal./2 VRMS Bal.
      Impedance: 600 Ohms @ 1 KHz UnBal./x Ohm Bal.
Capella Audio Interfaces
   · Input:
      Level: 1 VRMS UnBal./2 VRMS Bal.
      Impedance: 20K Ohms UnBal./ 40KOhms Bal.
   · Output:
      Level: 1 VRMS UnBal./2 VRMS Bal.
      Impedance: 600 Ohms @ 1 KHz UnBal./1 Ohm Bal.
ATM Connectivity
   · (4) OC-3 155Mbps per Centauri
   · Multimode Fiber
   · SC Connector
   · 6 video streams per OC-3
   · up to 22 Mbps/stream (adjustable based on quality desired)
   · VBR - NR Service
   · UNI 3.0/3.1
   · 100Kbps - 500 Kbps data SVC for call set-up
   · Audio carried on separate SVC from Video
   · Audio streams carried at 48 Kbps

### Digital Video Recording System (DVRS) 32

The digital video recording system supplied by NICE Systems LTD is state-of-the-art and a generation of technology beyond the original digital recorder systems. The DVRS 32 solution ensures real-time video is continuously recorded in each Security Equipment Room (SER) 50 for every camera 48 connected to the system at the frame rate required in the specification.

Every camera 48 signal will be linked through the DVRS 32 to the DVTS 30 via a Video Patch Bay (VPB) to allow recording of all cameras 48 in real time. The video Patch Bay (VPB) provides for a video "bridge" which splits the camera signal between the DVRS 32 and DVTS 30 for use by both subsystems. Although the locally recorded information on the DVRS 32 Logger will eventually be overwritten after a specified period, video/audio segments can be tagged, for playback from the Frontier Ops Screen (short-term based and still residing on the Logger's hard drive or JukeBox tape), and/or playback from the Long-term Archival Storage (LTAS) / Central Storage Server (CSS) (playback from CSS will require the NICE application):

In simple terms, after an event condition has occurred, from a predetermined time before the event to a predetermined time after the event, that video/audio segment will be tagged as associated with an ACS 28 alarm condition, If the event is tagged for long-term storage, then, in non-real-time, the video/audio segment will be passed over a VPN carried by the DVADTS 34 ATM network 26 to a centralized digital storage facility where it will be automatically recorded and archived in the LTAS. Otherwise, tagged events reside either on a given Logger or its associated tape JukeBox. For the number of events, segment lengths and frame rate specified, the centralized storage will capture and retain the long-term storage of tagged video/audio segments for the time configured. These archived segments, whether archived at the local logger or in the LTAS, can be recalled and viewed on any SOW 42 or other workstation connected to the DVADTS 34 and running the required software.

The DVRS 32 subsystem will also provide a Web Access Server (WAS), which will allow users, with proper authorization and Internet Explorer 5.5, or higher, to utilize DVRS 32 functionality over an HTPP link, which may include viewing of recorded video/audio, or DVRS 32 system monitoring, etc. HTTP requests sent from a browser to the WAS are translated into API commands that are sent to the appropriate logger. An H263+ video stream is then initiated from the logger to the H263+ player installed on the calling HTTP browser.

### Digital Video, Audio and Data Transport System (DVADTS) 34

Marconi has designed a highly reliable and survivable audio, video and data network, fully meshed and physically located in support of the Security system 10. It will support real-time audio and video for the DVTS 30, alarm data for the ACS 28, non-real time video for the DVRS 32, PTZ control via the DVTS 30 plus NMS 40 and CMS 38 control.

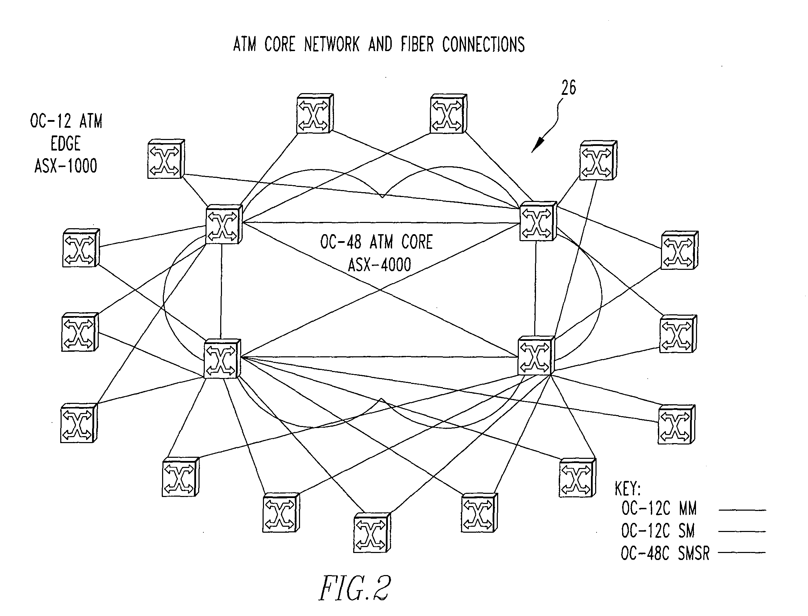

The system architecture (see Figure 2) consists of (4) ASX-4000 ATM switches at the core and (15) ASX-1000 ATM switches at the edge to provide bandwidth aggregation and transport for the DVTS 30, DVRS 32, and ACS 28 equipment. The Ethernet connectivity for the various subsystems is provided by (15) ES-2810 ATM edge switches (one per security equipment room), which employ LAN Emulation (LANE), to create, the necessary Virtual Private Networks (VPNs) across the ATM backbone.

### ATM Core Backbone

The core network backbone consists of four (4) fully meshed ASX-4000 ATM Switches with a MTBF of 253,132 hours and a system availability of 99.9996% (as configured) running at OC-48c over single mode fiber optic cable within the core. The mesh connections from each core switch are OC-48c links to the other three core switches. Each ASX-4000 core switch is connected via OC-12c links to logically adjacent ATM ASX-1000 switches at the network edge.

In case of loss of any single or double optical connection on the backbone, the ATM switch is capable of automatically re-routing all traffic around the failure without any human intervention whatsoever. Because of the full mesh design, the edge will withstand any single core switch failure and the core can carry the bandwidth requirements of the edge,

Each ASX-4000 is configured for a 20 Gbps of bandwidth in the chassis with the option of adding 20 Gbps more. With (3) OC48c connections per core Security system 10 ASX-4000 Switch, the aggregate bandwidth at the core is 7.5 Gbps.

### ASX-4000 as Configured, as an example.

· 20 Gbps of non-blocking switch capacity, expandable to 40 Gbps with fabrics 3 and 4 installed.
· (4) OC48c, 2.488 Mbps ports
· (16) OC12c, 622 Mbps ports
· Switch Control Processor (SCP), P5
· 8.x ForeThought® switch code
· Redundant fans
· (4) load-sharing AC power supplies (N+1)
· Network Equipment Building Systems (NEBS) compliant

### ATM Edge

### ASX-1000

At the network edge, each Security Equipment Room (SER) 50 will include one (1) Marconi ASX-1000 Multi-Service ATM Switch and one (1) ES-2810. Each edge ASX-1000 switch is configured with SGbps fabric backbone, and is dual home connected to the core ASX-4000's for network reliability. Also, each ASX-1000 is connected to a Marconi ES-2810 switch with an OC-3c link for interface to the network core. The Marconi ES-2810 switches provide the Ethernet service needed for the various subsystems.

Two (2) pairs of multimode or single mode fiber optic cables operating at OC-12c connect each SER 50 to the core network of four (4) ASX-4000 backbone switches. The connections are such that one (1) OC-12c goes to one core switch and one (1) OC-12c goes to another core switch providing a path around any single failure within the core. Each SER 50 switch has excess slots and capacity when operating normally to scale to 100% or more of the capacity as designed initially.

Each one of the ASX-1000 ATM Core switches will include (2) power supplies configured to support redundancy. The switch configuration will consist of (2) fabrics each one of them will control an OC-12 and (2) OC-3MM network modules.

There is sufficient capacity within each SER 50 based switch to allow for growth with the addition of network modules as dictated by the additional security requirements. Each SER 50 multi-service switch (ASX-1000) has the ability to support up to a maximum of ten (10) Gbps of non-blocking capacity on the ATM fabric and has a minimum of ten (10) unused network module slots that are available at each SER 50 for future expansion.

### ASX-1000 as Configured, for example.

· 2.5 Gbps of non-blocking switch capacity, expandable to 10 Gbps with fabrics 3 and 4 installed.
· (16) OC3c, 155mbps ports
· (2) OC12c, 655mbps ports
· 8.x ForeThought® switch code
· Redundant Power supplies

### ES-2810

The ES-2810 provides Ethernet connectivity at the edge of the network. The ES-2810 is connected via OC-3c multimode fiber into the ASX-1000 at the SER 50. There are (24) 10/100baseT auto-sensing connections in each ES-2810.

### ATM Routing, Services, and Security

Distributed LAN Emulation Services (DLE) is also configured in the network so as to provide fault tolerance on the various Emulated LANS (ELANS) configured in the system. With DLE, failures in the network will not disrupt LANE service.

Furthermore, all ATM switches use PNNI routing software, which will automatically reroute traffic around a problem, and reroute times have been independently verified at less than 10 milliseconds. Far quicker than any IP based routing protocol, such as OSPF or RIP. Network Security is maintained at various levels including physical isolation, firewalls, unique NSAP addressing, equipment element password protection, and SNMP community passwords.

### Cable Management System (CMS) 38

A Cable Management System (CMS) 38 is added to the Integrated Security Solution, which consisted of the software and hardware to provide management for all communications cables, duct banks, cable pathways, equipment, outlets, installation and testing data, status tracking, and importation of existing facility AutoCad files. Furthermore, the CMS 38 included the implementation of the approved labeling conventions and subsequent labeling of all elements of the security system 10. The Security system 10 collected significant data, with over 7,000 cable terminations, hundreds of individual pieces of equipment/components, and all associated rack elevation drawings, CAD drawings, and test data.

The fundamental purpose of the CMS 38 is to track the individual circuits and capacity of the cable system and network controlling equipment in the Security system 10. But beyond these fundamentals, the CMS 38 is implemented so as to provide full asset management tracking of all elements supplied in the security system 10, automated importation functions for pulling in updates from the facility CAD department, service tracking modules, and hierarchical drill-down capabilities focused on per project elements.

Marconi supplied (1) CMS 38 server and (5) CMS 38 workstations to account for the anticipated data entry and retrieval load to be placed on the security system 10. The newly installed CMS 38 system will be tied directly into the process flow of work orders used by projects in the airport. All moves/adds/changes (MACs) to cable plant or equipment locations 16 will be tracked in the CMS 38.

### Network Management System (NMS) 40

The Network Management System's (NMS) 40 main function is in monitoring the installed network infrastructure and reporting on faults and performance. The NMS 40 design comprises the management of the DVADTS 34 ATM backbone, Security Operator Workstations, Security system 10 Servers, DVRS 32, and DVTS 30 subsystems.

To manage the core ATM network 26, Marconi's ServiceOn Data was selected, as it provides a view into the ATM network 26 and is capable of integrating with other IP based devices. In addition to managing the core network, various subsystem providers utilize their own management software to monitor and detail specific aspects of the unique subsystem. For example, the CellStack NMS 40 software acts as a Simple Network Management Protocol (SNMP) Proxy Agent, collecting details about the DVTS 30 via direct ATM calls to the DVTS 30 subsystem components, and passes that information directly into HP Opvenview. Given ServiceOn Data and CellStack Manager can both integrate into HP Openview, providing a single framework from which to view the various subsystems, the NMS 40 platform is capable of consolidating the information for review by the network administrator. Furthermore, given the paging/email capability built into ServiceOn Data 2.2, a network manager is capable of receiving instant notification of a system failure or a pre-configured triggered event.

HP Openview was used as the base NMS 40 software application, with Marconi's ServiceOn Data, and CellStack's management software configured through API integrated application systems to provide a total management solution that not only address the specified requirement of the Security system 10, but go far beyond these requirements, by providing many advanced features such as ATM circuit tracing, real-time circuit graphing, circuit provisioning, event correlation, web based reporting, performance threshold monitoring, and alarm customization, that only this combination of NMS 40 applications can provide.

The NMS 40 Operating System (OS) design included: Windows 2000 Server, with Service Pack 2/3 installed, an IBM rack mountable X Series 1.8GHZ CPU, with 2Gb of memory, and (4) RAID configured Disk drives. To help facilitate this, a RAID 1 configured controller, along with (4) 36Gb SCSI disks, will provide (2) disk mirroring support systems. One mirror will support the Operating System (OS), while the 2nd disk mirror will provide a storage location 16 for the NMS 40 Databases, and collected data. Additionally initial and future system performance is being addressed with the configuration of a multi-processor platform supporting dual CPUs, and enough memory to address the needs of the three major NMS 40 applications, A modem, sound card, and a DVD R/RW drive, are configured into the server platform to support current and future utility needs such as incremental and full backups, and future audio and paging responses to events and alarms captured through the NMS 40 and system event utilities.

Additionally, HP Openview and ServiceOn Data provide a login facility with password authentication to ensure the security of management data with a web UI that allows user roles to be defined and information to be filtered based on the area of the network a group is responsible for. Security is additionally addressed through the use of in-band communications to manage the data transmission equipment in the Security system 10 network. This in-band communication provides a TCP/IP addressable method for the NMS 40 to access and manage all Security system 10 supported equipment. For security purposes no routing paths exist between the management ELAN and the remainder of the Security system 10 network. The ServiceOn Data application also comes with additional security enhancements by providing an audit log, detailing the current date, and time, the user-account, and command issued for all configuration control commands issued within this sub-process of the NMS 40 applications.

An operator workstation for the NMS 40 is being provided that will offer all of the functionality of the actual NMS 40 platform. This is being done to allow the NMS 40 server to be housed in a secure environment. The NMS 40 workstation will be situated in a separate location 16 from the NMS 40, and will be the primary point of use for the system. In order to insure that the system performs as expected, the following hardware has been chosen.

While HP OpenView can provide minor management and discovery support for the Marconi equipment via the TCP/IP transport, ServiceOn Data is the real powerhouse providing true ATM discovery through ILMI signaling. Finding and mapping the ATM paths that interconnects the meshed architecture of this switched environment is just one of this application's virtues. Enhanced troubleshooting and circuit provisioning are additional features provided by integrating this NMS 40 API into the overall support of the NMS 40 subsystem.

### The Security Operator Workstation

The entire integrated system, from the security officer's perspective, is centered on the Security Operator Workstation (SOW) 42. The SOW 42 is where the Security system 10 virtually comes together into one graphical user interface (GUI) 44 for use by the security officer. A GUI 44 into the Security system 10 provides the security officer with the tools necessary to be alerted to an alarm or call-button event, and then gives the officer the facilities to take action in response to the event.

The main application running on the Security Operator Workstation is the Matrix Frontier Workstation 5.7 software. The Matrix Frontier software is a client/server architecture, whereby the Frontier Server utilizes API calls to communicate with the DVTS 30 and DVRS 32 subsystems respectively, to allow for the live audio/video and recorded audio/video to be sent to the client side Frontier Workstation software. Furthermore, the Matrix Frontier software allows the Security Officer to take telemetry control of a PTZ capable camera 48 and provide the officer with the ability to manipulate the camera 48 to get the best possible view of the particular area of concern.

If the security officer wishes to go beyond the capabilities of the Matrix Frontier software, and control the DVRS 32 or DVTS 30 subsystems directly, he/she can do so by calling up the specific subsystem control applications, such as the Nice Vision Control (for recorded audio/video playback) or the CellStack Operator (for live audio/video feeds) software. This gives the officer the flexibility of full functionality over the ACS 28, DVTS 30, and DVRS 32 systems, as well as, an integrated view provided by the Matrix Frontier application.

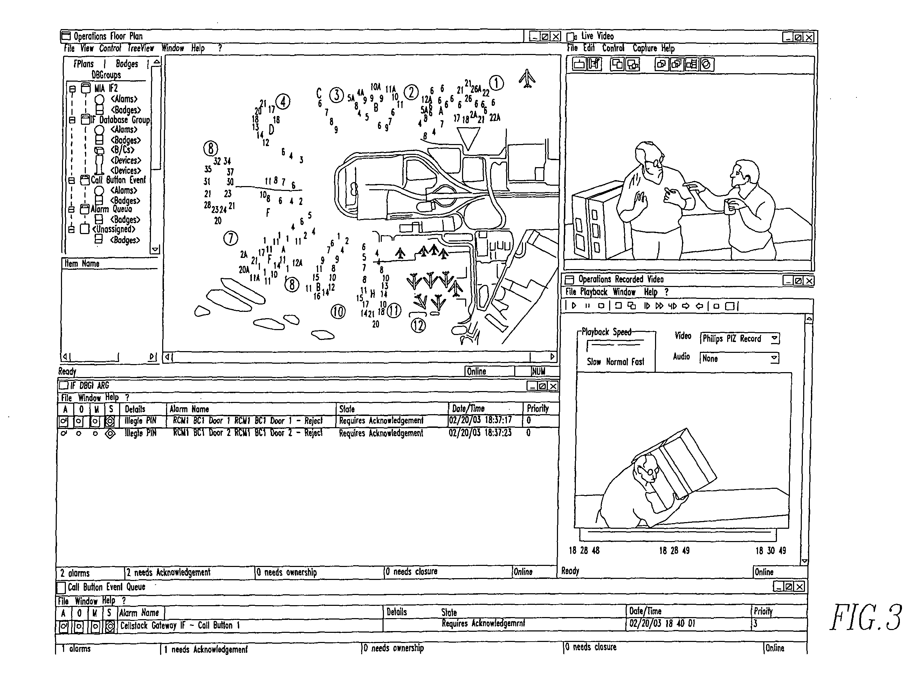

As is shown in Figure 3, the main Matrix Frontier Workstation operations screen 46 provides a view into the graphical campus map assigned to the officer, as well as, a live and recorded video playback window.

### Frontier Workstation Software

The Frontier 5.7 software provided by Matrix Systems, Inc. ties all of the various subsystems together by providing a single graphical user interface (GUI) 44 called the Frontier Workstation. The Frontier Workstation software will alert the security officer in an event condition and then provide the facilities for that officer to respond. These facilities include, but are not limited to, the ability to access live audio/video feeds to a particular location 16 via the DVTS 30 subsystem, and/or simultaneous viewing capability of recorded events from the DVRS 32 subsystem.

The ability for the Frontier application to provide this graphical user interface into the various subsystems stems from the basis of the Security system 10 architecture, which is a software driven switched virtual circuit (SVC) technology. Unlike traditional Security system 10 architectures, which rely heavily on video matrix switching and dedicated bandwidth assignments for each camera 48 location 16, an SVC technology takes advantage of the features inherent in the Asynchronous Transfer Mode (ATM) network, and allows for what is essentially video-on-demand. Bandwidth is assigned on an as needed basis, without degradation of quality or performance in the video signal. With the DVTS 30 compression and decompression of video/audio/PTZ signals from the cameras 48 to the SOWs 42, under the software driven administration of the Frontier application, the security officer residing at the SOW 42 will only be given, and only require bandwidth for, the video/audio connections he/she establishes.

Furthermore, by integrating the ACS 28 with the DVRS 32 and DVTS 30 subsystems, an advanced capability has been established allowing events to immediately activate camera 48 control to a preset, initiate audio/video recording, and alert the officer residing at the SOW 42. This provides the security surveillance officer with the necessary surveillance tools immediately, and allows the officer to focus on responding to an event, as opposed to finding the event and then responding. The length of time to respond to an event in the Security system 10 will be reduced, due to the enhanced functionality of the designed system, and provide the officer with the tools needed from a surveillance perspective, giving audio and video connectivity to the affected event area, and in the case of cameras 48 capable of PTZ, will give telemetry control.

### NiceVision Control Application

The SOW 42 will also have other software packages resident and available for the security officer to use. For example, the NiceVision Control application may also be run on the SOW 42 to supplement recorded video playback capabilities provided by the recorded video window available in the Frontier Workstation software. The NiceVision Control application will allow the operator to search for and play back recorded audio/video clips independent of the Frontier software application. Playback is available from A/V stored on the NiceVision Recorder hard drive or associated tape jukebox. Searches may be performed on the following parameters; alarm, date/time, camera 48, trigger type, comments on flagged video clips.

Once playback is initiated, the Control application will provide the following functions:
· Select audio/video playback controls for: start/stop, pause/resume
· Select video playback controls for: fast forward, slow forward, frame by frame, scan forward, scan backwards, relative jump to specific time within the current segment, loop back. Audio will be disabled during these functions.

Playback of the H.263+ compressed video is achieved via an IP-based video stream that is sent over the Ethernet VPN residing within the ATM based New Security Network. This compressed video stream, whose bandwidth is about 1Mbs/video stream, reaches the SOW 42 over its 10/100 Ethernet Network Interface Card and is then directed to the actively configured "monitor" port. Audio associated with the playback will be sent to the SOW's 42 configured sound card, and distributed to the attached speakers connected to the soundcard.

### CellStack Operator

In addition to the Frontier Workstation, and the NiceVision Control Application, the CellStack Operator application will also reside on the SOW 42. The CellStack Operator will supplement the other applications by providing more granular control and views into the DVTS 30, or live video, portion of the Security system 10. The CellStack Operator allows the security officer to manually setup audio and video connections, and provide for Manual Mode control of the DVTS 30. Manual Mode control is defined as a mode of operational control of the DVTS 30 portion of the Security system 10, whereby an operator is required to manually setup audio and video connections, as opposed to the automatic mode of operation provided in the Frontier application. In the automatic mode of operation, audio and/or video connections are automatically established once an operator has acknowledged an event. For example, if the security officer wanted to monitor a particular gate, he/she would use CellStack Operator to locate the camera 48 associated with the desired gate, and then, if applicable, have full PTZ control. If desired, the security officer could additionally setup a bi-directional audio connection to an intercom located in the area to communicate.

### SOW 42 Hardware and Software Overview

The SOW 42 is comprised of several key software and hardware components :
SOW Workstation Hardware Configuration
   Windows 2000 Machine
   1.5 Ghz, 1 GB RAM, with 40G HD
   Osprey 210 Video Capture Card
   Marconi ATM NIC Card, ForeRunner HE 155
   CellStack CapellaLite video Decoder
   10/100 Ethernet Card
   Sound Card with Speakers
Software Suite
   Frontier Server Software
   The following software will be provided on the ACS Security system 10 Frontier Server:
   · Windows 2000 Server
   · PCAnywhere
   · Tardis Synchronization Software
   · CRT Telnet Software
   · Serv-U FTP Server Daemon
   · Microsoft SQL Server 2000
   · Frontier Services Version 5.7
   Software Suite
   The following software will be provided on the SOWs 42:
   · Windows 2000 Professional
   · Frontier Workstation Version 5.7
   · PCAnywhere
   · Tardis Synchronization Software
   · NICE Vision Control Application 5.0
   · Cellstack OWS 4.0
   · Microsoft SQL CAL
   · Internet Explorer 5.5
   · Osprey Video Capture software

The following is a list of the various subsystems and their respective manufactures that constitute one version of a security system 10. It should be noted that although the following manufacturers have been integrated into a comprehensive ISS, the concept and possibility of alternate subsystem providers replacing one, or all, of the various subsystem categories is possible. Furthermore, it should be noted that additional subsystems such as Fire Control, Biometrics, etc. can be added to this solution given its common signaling transport architecture.

This list of subsystems and their providers has been integrated, tested and proven as an effective and highly sophisticated Integrated Security Solution:
· Access Control System (ACS) 28 - Matrix Systems, Inc.
   The ACS 28 provides for administration and management of the ingress and egress points throughout the selected location 16.
· Digital Video Transport System (DVTS 30) - CellStack Systems
   The DVTS 30 provides for the high quality live audio/video feeds, telemetry control of cameras 48, and dry contact closure detection.
· Digital Video Recording and Storage System (DVRS) 32 - NICE Systems LTD
   The DVRS 32 provides for the digital storage and retrieval of the audio/video feeds.
· Digital Video, Audio, and Data Transport System (DVADTS) 34 - Marconi Communications
   The DVADTS 34 provides for the digital transport of all audio, video and data transmissions that are apart of the complete integrated security solution.

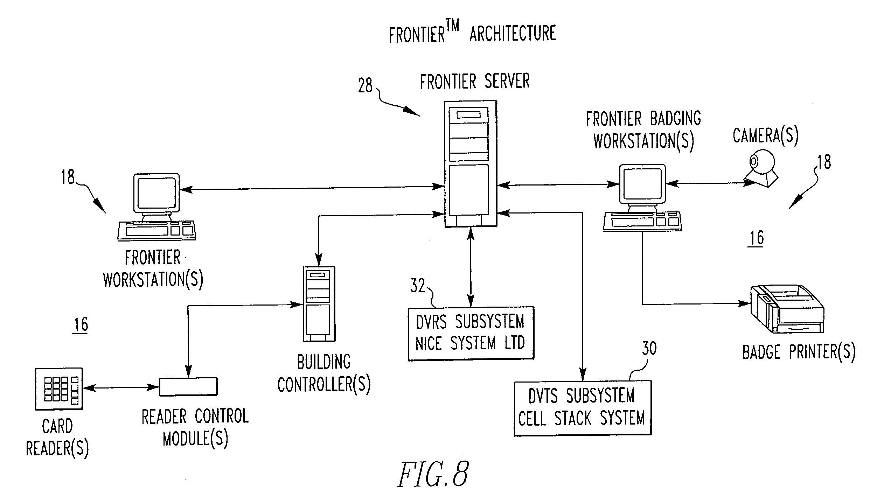

The ACS 28 architecture is shown in Figure 8. The main components of the Frontier Architecture include:
· Frontier Server*
· Frontier Workstation (s)
· Frontier Badging Workstation(s)
· Building Controller(s) 22
· Reader Control Modules
· Card Readers.
*In a robust configuration the Frontier Server is configured in a server array so as to provide high-availability, and if the primary server were to fail then the backup server would take over.

Card readers are located throughout the campus, which communicate upstream to the Reader Control Modules. The Reader Control Modules aggregate the card reader communication, and communicate upstream to the Building Controllers 22. The Building Controllers 22 aggregate the reader control module communications and communicate upstream with the Frontier Server.

Frontier Workstation software, the client side of the overall ACS 28 client-server application, resides on a personal computer running Microsoft Windows 2k. The Frontier Workstation Software is the main software application in the suite of software that makeup the Security Operator workstation (SOW) 42.

Frontier Badging Workstations are used to input a person's security data into the SQL Database on the Frontier Server, and is used to produce authorized badges with magnetic stripes to be used in the card readers located throughout the campus.

The ACS 28 by itself, without integration with the DVTS 30 and DVRS 32, is capable of maintaining access level security via the use of magnetic swipe cards at various checkpoints outfitted with card readers. If an alarm occurs within the system, such as invalid badge, or forced door, the alarm will be routed to the desired security officer located at a Frontier Workstation.

To integrate the ACS 28 with the live audio/video feeds, camera 48 telemetry control, call-buttons, and recorded audio/video playback, the Frontier Server must be able to communicate with the CellStack Gateway (DVTS 30) and NICE Vision Pro Loggers (DVRS 32). This integration requires communication via TCP/IP to both subsystems, as well as, specific configuration information to be placed in each of the subsystems.

The configuration of the ACS 28 to interface with the DVTS 30 and DVRS 32 requires the following:
· In the Interface Setup section of the Frontier Software, configure the recording media with the various NICE Vision Pro Loggers located in the system. This entails assigning a name and inputting the IP address of each of the various Loggers located in the system.
· In the Interface Setup section of the Frontier Software, configure the CellStack subsystem with the name and IP address of the CellStack Gateway Server.
· Once the two subsystems interfaces have been defined within the ACS 28, then the use of each of the subsystem resources must configured. The resources that must be configured include:
   · For the DVTS 30: cameras 48, presets, call-button interfaces on the I/O units, audio channels
   · For the DVRS 32: audio recording channels, video recording channels
· After the DVTS 30 and DVRS 32 interfaces and resources have been defined, then the sequence of use of the various resources must be defined and assigned to the specific alarms that the ACS 28 will generate. These sequences include items such as:
   · Connect live video from camera A to SOW 1.
   · Move camera A to preset number 1.
   · Initiate audio communications to intercom station 1 located at door 1.
   · Tag the audio recording for the intercom station 1 for retrieval.
   · Tag the video recording for camera A for retrieval.

By defining the DVTS 30 and DVRS 32 subsystems within the ACS 28, along with the allowable resources to be used by the ACS 28, the ACS 28 then is able to make calls to the DVTS 30 and DVRS 32 interfaces to use the various resources to provide a more enhanced security and surveillance solution. Upon an alarm event the ACS 28 can then connect live video and audio, as well as, record the event and further use this information for display at the SOW 42.

### DVTS 30 Components and Configuration

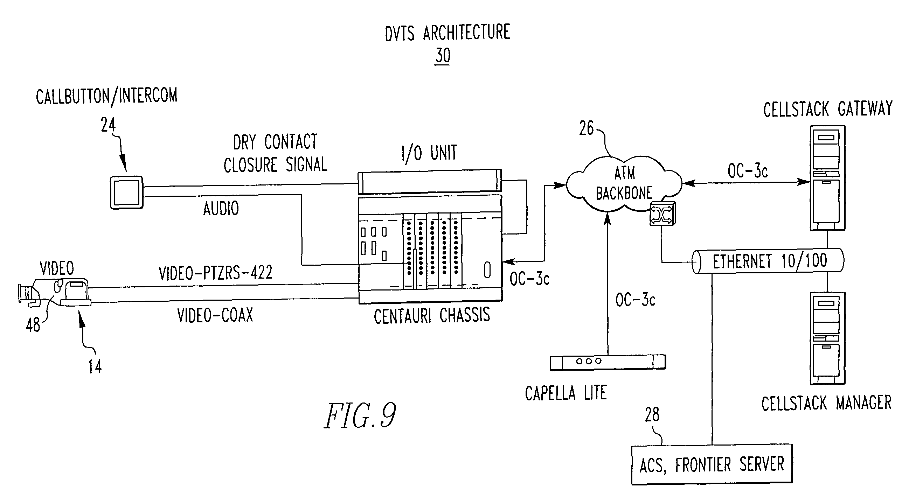

The DVTS 30 architecture, shown in Figure 9, consists of components manufactured by CellStack Systems. They include:
· Centauri Chassis
· 32 Port I/O Unit
· CellStack Gateway Server
· Capella Lite Decoder
· CellStack Operator Software*
· CellStack Manager Software
*used only to setup and testing the subsystem, but not used actively by the integrated solution

The CellStack Centauri Chassis are located throughout the campus and are what the intercom stations, serial camera telemetry cables, and NTSC live video cameras are connected. At the same location 16 as the Centauri Chassis, the 32 Port I/O units are connected to the Centauri and provide for the dry contact closure detection needed to support the call-button functionality.

The Centauri Chassis units are connected upstream to the DVADTS 34 via ATM OC-3c connections. The Centauri encodes the various audio and video streams and sends that across the DVADTS 34 to the Capella Lite Decoder units which then provide the NTSC video signal, as well as bi-directional audio at the security operator workstation (SOW) 42.

CellStack Operators main function in the ISS is to assist in the configuration of the DVTS 30 subsystem, and specifically in the area of camera 48 telemetry preset setups. Each of the various PTZ cameras 48 in the campus can be setup with presets, which can be configured and tested within CellStack Operator. Furthermore, CellStack Operator assist in the testing of the various video feed prior to making them available to the ACS 28 via the CellStack Gateway.

CellStack Manager is used to configure resources and parameters within the DVTS 30 subsystem, and maintains the main database in the DVTS 30 database that defines all aspects of the subsystem. The CellStack Manager would be configured with items such as:
· ATM NSAP Addressing
· Physical Topology information
· Profiles to define encoding parameters
· SVC call setup profiles w/ Quality of Service parameters

The CellStack Gateway Server provides the API for use by the ACS 28 to give access to the ACS 28 to the DVTS 30 subsystem resources. The CellStack Gateway communicates with the ACS 28 via TCP/IP.

The configuration of the DVTS 30 subsystem is an entailed process that defines every resources, encoding type, profile, addressing, telemetry control protocol etc. Once the subsystem has been setup independently to be able to access and control the various resources attached to the subsystem, the resources are then made available to the ACS 28 via the configuration of the Alias Table and Alias Telemetry Table with the CellStack Gateway Server. It is within the Gateway Server that the various resources are defined for use by a calling application utilizing the CellStack Gateway Server API.

Items configured within the CellStack Gateway Server Alias Table and Alias Telemetry Table includes:
· Specific cameras 48 inputs
· Specific audio inputs
· Specific audio outputs
· Specific video decoding points
· I/O unit definitions(dry contact closures)
· Specific Telemetry Control definitions for PTZ cameras 48

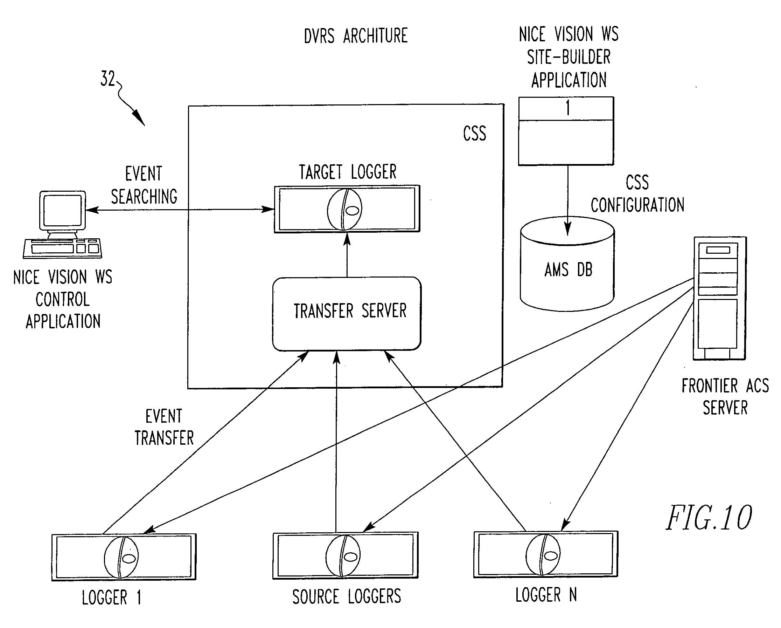

The DVRS 32 Architecture, shown in Figure 10, consists of the following components:
· NICE Vision Pro Logger w/ attached Tape JukeBox. (Qualstar)
· Administration Management Server(AMS)
· Web Access Server(WAS)
· Central Storage Server(CSS)/Long-term Storage Server(LTSS)
· NICE Vision Control Application*
· NICE SiteBuilder Application*
*used only to setup and testing of the subsystem, but not used actively by the integrated solution

The NVPRO Loggers record video 24x7 on all channels attached, and records audio input upon a triggered event. Each NVPRO logger simultaneously records digitized audio/video to its. local hard drive, as well as, to a SCSI attached tape JukeBox (mfg. Qualstar). Each of the NVPRO Loggers in the systems is network connected via Ethernet 10/100 cards to the DVADTS 34 to allow for communication to the AMS, as well as, to make available a communications path to its API. The API on the NVPRO Logger(s) is used by the ACS 28 to make tagging and retrieval calls to the DVRS 32 subsystem.

The AMS maintains subsystem general parameters such site administration policies, camera 48 setup information, NVPRO Logger configurations, and NVPRO Logger IP addresses. The main database of the DVRS 32 subsystem is contained on the AMS server.

The CSS is where items tagged for long-term storage are stored.

The Web Access Server provides a means for a Web Browser to access resources within the DVRS 32 subsystem via an HTTP protocol. The WAS is not a functioning part of the integrated security solution, however, is provided on various workstations within the security system 10 to give this type of access to the specific DVRS 32 subsystem functions.

The NICE Vision Control Application is used to access various subsystem functions such as record a given audio/video port, playback a segment of video etc. It is used at the subsystem level solely and is not a functioning component of the Integrated Security Solution. It is also used for testing purposes to verify subsystem configuration.

The NICE SiteBuilder Application is used to setup the various loggers and resources within the DVRS 32 subsystem.

The configuration needed within the DVRS 32 subsystem to allow it to be integrated into the ISS include items such as:
· IP Address assigned to each NVPRO Logger and CSS
· Each VPP port defined with the recording parameters such as frames per second and recording bit rate
· Each APP port defined with the recording parameters such as triggered thresholds and encoding method
· Event triggers to include 1 minute pre and 1 minute post event
· User access profiles
· Time synchronization parameters such as source clock

The DVADTS 34 architecture is flexible and is designed around the current and future bandwidth requirements of the various other subsystems which utilize this digital transport. The DVADTS 34 architecture is made up of products provided by Marconi, and consists of the following products:
· ASX 4000
· ASX 1000
· ES 2810

The ASX 4000 provides the backbone ATM transport, and aggregates the tributary uplinks of the ASX 1000's.

The ASX 1000 provides the direct OC-3c connectivity to the DVTS 30 subsystem, as well as, provides the aggregation point for the OC-3c attached ES-2810 and its Ethernet traffic.

The ES-2810 provides Ethernet connectivity to all subsystems that require such transport, and further places that ethernet traffic onto the ATM backbone through an OC-3c uplink to an ASX-1000.

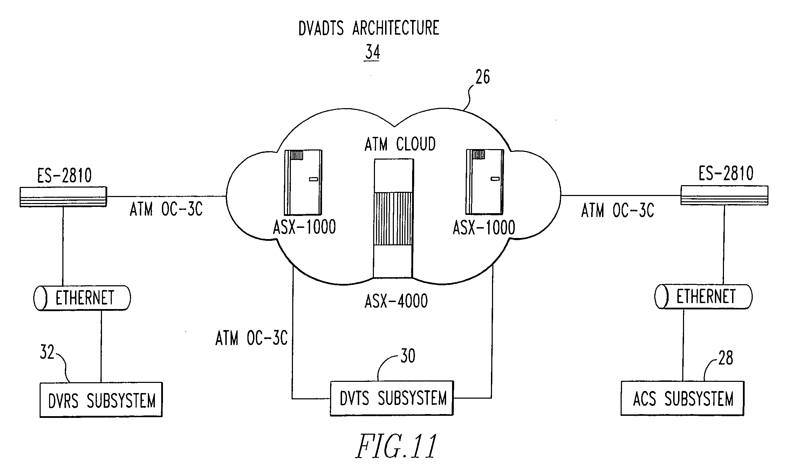

The configuration of the DVADTS 34 system entails the setting of the digital network so as to provide a highly resilient, and bandwidth ready transport for use by the various subsystem providers. The configuration of the DVADTS 34, shown in figure 11, consists of items such as:
· NSAP Addressing
· IP Addressing
· LAN Emulation Services w/ Distribution
· ES-2810 Port Definitions w/ ELAN Assignment
· Port Scheduling
· Fiber routing assignments
· User passwords
· SNMP trap target locations
· Fabric and netmod assignments

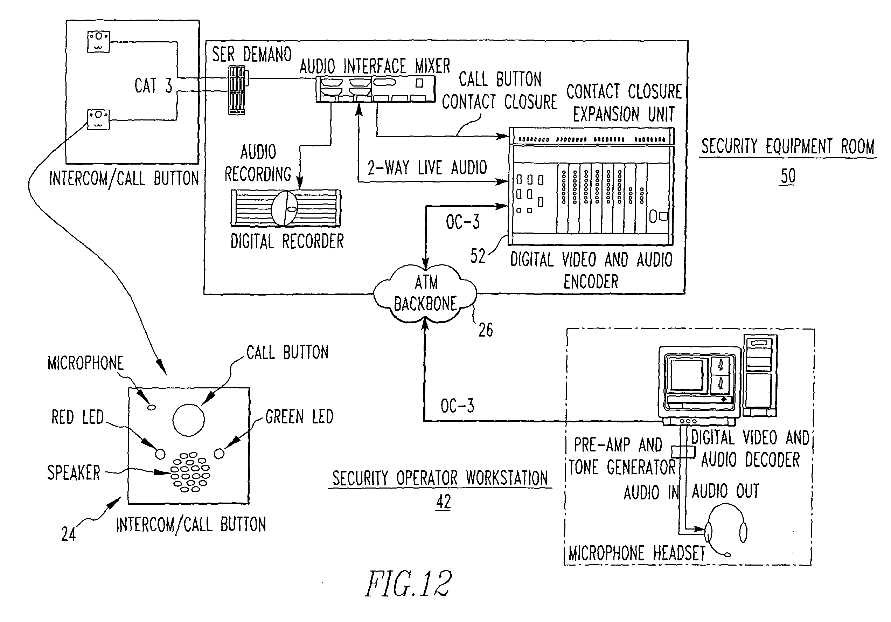

The Audio Interface Unit (AIU), shown in Figure 12, provides two way audio communications between the Security Operator Workstation and intercom stations located throughout the campus. The AIU, acting upon a message from the ACS 28, utilizes the built in audio interface of the DVTS 30 and the network of the DVADTS 34 to connect a user at an intercom station to a security operator at the SOW 42. Once this connection is established the AIU then provides an audio path to the DVRS 32 for recording of the communication between the intercom user and the security operator.
· There are three major components of the Audio Interface Unit. They are the:
   · Intercom Station
   · AID mixer
   · Headset Preamp

This intercom station is a surface-mounted, hands free, full duplex intercom. Its internal amplifier and speaker operate from line level audio IN and its microphone and preamp provide line level audio OUT to the DVTS 30 interface. The station provides contact signaling information to alert the DVTS 30 subsystem of activation and has two LED indicators to advise the user of call placed and received status.

The Audio Interface Mixer (AIM) compliments the Intercom Station and is designed as a 24-channel interface. The AIM provides power and is a convenient distribution point for all signals to and from the intercom station. Signals from the intercom are received from the intercom on standard 18 AWG wire and terminated to a demarc (110 or M66 type) mounted in the Security Equipment Room. The AIM will connect to the demarc via a standard 50 pin telephone connector. The AIM mixes the audio in and audio out from each intercom and provides the combined output at line level to the DVTS 30 and the DVRS 32.

The Headset Preamp enables low power audio headsets to be interfaced to line level audio in/out devices. The headset's microphone output is amplified to line levels while incoming line level audio is adjusted to earpiece levels. In addition, the preamp provides an adjustable level, monitor tone to the audio out path. Upon connection, this tone provides a record warning tone to the Intercom Station.

The configuration of the AUI consists of configuration entrees in both the DVTS 30 and DVRS 32 subsystems, which have previously been discussed. Other than the physical connections required by the AUI, the AUI itself does not require any individual parameter changes, although, adjustment of the headset gain can be done if desired. The configuration that occurs in the DVRS 32 and DVTS 30 subsystems include:
· Setting up audio and call-button interfaces in the DVTS 30 and providing the resource via the CellStack Gateway.
· Setting up a recording port in the DVRS 32 subsystem with appropriate encoding and threshold levels.
· Configuring the ACS 28 to use the resource of the audio and call-button.

Applicant timing is provided by the Tardis Synchronization Software. The server portion of the software is running on the main ACS Server, and the DVTS 30, DVRS 32 and SOWs 42 all derive application timing from this source with their respective client side version of the Tardis application.

The Audio Interface Unit comprises three main functional components, and are supplied by Emcom Systems:
The model numbers are as follows:
   Model 842- Intercom CallButton Unit/Voice End Station
   Model 843- Audio Interface Mixer/24 Channel
   Model 844- Headset Preamp

The Cable Management System installed in support of this large-scale deployment was the Cerberus CMS. The Cerberus CMS is a client-server architecture with the server portion running on a Windows 2000 Server platform. The workstations are running Windows 2000 Professional. The other main application running is that of AutoCAD 2002. The Cerberus CMS installation is a standard installation, and various data elements such as fiber test data, room layouts, conduit locations, fiber terminations, equipment specifications, inventory, etc. relative to the Integrated Security Solution are stored in the Cerberus database running on the server. Moves/adds/changes to the infrastructure are recorded in the CMS.

The Integrated Security Solution derives its main flexibility and its relative ease of integration, by utilizing a common communications transport. Through the use of the DVADTS 34, a digital network transport gives each of the subsystems a common means of communicating, which hitherto had been through physical hardwire or not integrated whatsoever. As Figure 13 shows, an ISS can be a very complicated system, however, by viewing the subsystems independently and understanding what each of the subsystems require to interface to other elements, it becomes much clearer. Furthermore, the ISS described herein can be further expanded, or constrained dependent upon the specific requirements governing its deployment given the common communications transports.

Although the invention has been described in detail in the foregoing embodiments for the purpose of illustration, it is to be understood that such detail is solely for that purpose and that variations can be made therein by those skilled in the art without departing from the spirit and scope of the invention except as it may be described by the following claims.

## Claims

1. A security system comprising:
N surveillance nodes, where N is greater than or equal to 17 and is an integer, each surveillance node providing a video source of a scene of a location of the surveillance node;
a monitoring node having a display in communication with the N surveillance nodes; and
a controller which simultaneously continuously shows on the display a live scene of the surveillance node when a predetermined event occurs at the surveillance node, and a recorded scene of the node for a predetermined time which spans before, during and after the predetermined event, the controller in communication with the monitoring node and the N surveillance nodes.

2. A system as described in Claim 1 wherein each surveillance node includes an audio source which receives sounds from the respective surveillance node's location, and the controller plays the associated sound from the surveillance node with either the live or the recorded scenes.

3. A system as described in Claim 2 including an ATM network through which the N surveillance nodes, the monitoring node and the controller communicate.

4. A system as described in Claim 3 including an access control system which manages access through the locations of the surveillance nodes, the access control system in communication with the surveillance nodes.

5. A system as described in Claim 4 wherein the ATM network includes a DVTS which produces live audio/video feeds of the locations of the surveillance nodes.

6. A system as described in Claim 5 including a DVRS which continuously records real-time video from each video source, the DVRS in communication with the DVTS.

7. A system as described in Claim 6 wherein the ATM network is part of a DVADTS in communication with the ACS, DVTS and the DVRS, which supports the real-time audio and video for the DVTS, data for the ACS and non-real time video for the DVRS.

8. A system as described in Claim 7 wherein the ATM network includes a cable system and circuits, and including a CMS to manage and record the cable system and circuits of the ATM network.

9. A system as described in Claim 8 including an NMS in communication with the ATM network which monitors the ATM network for faults and performance.

10. A system as described in Claim 9 wherein the monitoring node includes a SOW through which communications with and commands to the surveillance nodes occur.

11. A system as described in Claim 10 wherein the SOW has a GUI with the display, and an operations screen which shows a map with respect to a surveillance node of interest, a live video window and a recorded video playback window of the location of the surveillance node of interest.

12. A system as described in Claim 11 wherein the video source includes a camera, and the SOW aims the camera to obtain a desired view of the location.

13. A system as described in Claim 12 wherein the SOW controls the DVRS, the ACS and the DVTS.

14. A system as described in Claim 13 including SERs, each SER having an encoder which receives video from the cameras of the surveillance nodes that are in communication with a respective SER, and compresses the video, and transmits the compressed video into the ATM network.

15. A system as described in Claim 14 wherein each SER receiving from and transmitting to the SOW and the surveillance node to which it is connected bidirectional audio.

16. A security system comprising:
N surveillance nodes, where N is greater than or equal to 2 and is an integer, each surveillance node providing a video source of a scene of a location of the surveillance node;
a monitoring node having a display in communication with the N surveillance nodes;
a controller which simultaneously continuously shows on the display a live scene of the surveillance node when a predetermined event occurs at the surveillance node, and a recorded scene of the node for a predetermined time which spans before, during and after the predetermined event, the controller in communication with the monitoring node and the N surveillance nodes; and
an ATM network through which the N surveillance nodes, the monitoring node and the controller communicate.

17. A method for maintaining security comprising the steps of:
providing a video source of a scene of a location of each surveillance node of N surveillance nodes, where N is greater than or equal to 17 and is an integer; and
showing simultaneously and continuously on a display of a monitoring node in communication with the N surveillance nodes with a controller a live scene of the surveillance node when a predetermined event occurs at the surveillance node, and a recorded scene of the node for a predetermined time which spans before, during and after the predetermined event, the controller in communication with the monitoring node and the N surveillance nodes.

18. A method as described in Claim 17 wherein each surveillance node includes an audio source which receives sounds from the respective surveillance node's location, and including the step of playing the associated sound from the surveillance node's location with either the live or the recorded scenes with the controller.

19. A method as described in Claim 18 including the step of communicating through an ATM network between the N surveillance nodes, the monitoring node and the controller.

20. A method as described in Claim 19 including the step of managing access through the locations of the surveillance nodes with an access control system, the access control system in communication with the surveillance nodes.

21. A method as described in Claim 20 wherein the providing step includes the step of producing live audio/video feeds of the locations of the surveillance nodes with the DVTS of the ATM network.

22. A method as described in Claim 21 including the step of recording continuously real-time video from each video source with a DVRS, the DVRS in communication with the DVTS.

23. A method as described in Claim 22 wherein the providing step includes the step of supporting with the ATM network which is part of a DVADTS in communication with the ACS, DVTS and the DVRS, the real-time audio and video for the DVTS, data for the ACS and non-real-time video for the DVRS.

24. A method as described in Claim 23 wherein the providing step includes the step of managing and recording a cable system and circuits of the ATM network with a CMS.

25. A method as described in Claim 24 including the step of monitoring the ATM network for faults and performance with an NMS in communication with the ATM network.

26. A method as described in Claim 25 wherein the providing step includes the steps of communicating with a SOW of the monitoring node from the surveillance nodes, and sending commands from the SOW to the surveillance nodes.

27. A method as described in Claim 26 wherein the showing step includes the step of showing on an operations screen of the display a map with respect to a surveillance node of interest, a live video window and a recorded video playback window of the location of the surveillance node of interest.

28. A method as described in Claim 27 including the step of aiming with the SOW the camera of the video source to obtain a desired view of the location.

29. A method as described in Claim 28 including the step of controlling the DVRS, the ACS and the DVTS with the SOW.

30. A method as described in Claim 29 including the steps of receiving video from the cameras of the surveillance nodes at an encoder of a respective SER that is in communication with the surveillance nodes, compressing the video with the encoder, and transmitting the compressed video into the ATM network with the encoder.

31. A method as described in Claim 30 including the step of receiving from and transmitting to the SOW and the surveillance node from each SER to which each SER is connected, bidirectional audio.

32. A method for maintaining security comprising the steps of:
providing a video source of a scene of a location of each surveillance node of N surveillance nodes, where N is greater than or equal to 2 and is an integer; and
showing simultaneously and continuously on a display of a monitoring node in communication with the N surveillance nodes with a controller a live scene of a surveillance node when a predetermined event occurs at the surveillance node, and a recorded scene of the surveillance node for a predetermined time which spans before, during and after the predetermined event, the controller in communication with the monitoring node and the N surveillance nodes; and
communicating between the N surveillance nodes, the monitoring node and the controller through an ATM network.
